# EUROPEAN PATENT SPECIFICATION

(11) **EP 1 286 517 B1**
(45) Date of publication and mention of the grant of the patent: **06.10.2010**
(21) Application number: 02018026.1
(22) Date of filing: 12.08.2002
(51) Int. Cl.: H04L 29/06

(54) **Message transmission between telecommunication network entities**
Nachrichten Übertragung zwischen Einheiten eines Telekommunikationsnetzwerks
Transmission de message entre des entitées d'un réseau de télécommunication

(30) Priority: 10.08.2001 AU PR695601
(43) Date of publication of application: 26.02.2003
(60) Divisional application: 10004967.5
(73) Proprietor: Telefonaktiebolaget LM Ericsson (publ), 164 83 Stockholm (SE)
(72) Inventor: Groves, Christian, 3015 Newport Victoria (AU); Rytina, Ian, 3053 Victoria (AU); Graf, Leslie, 3103 Melbourne (AU); Hollis, Mark, Park Orchards 3114 (AU); Noguera, Juan, 3040 Essendon VIC (AU); Terrill, Stephen, 11232 Stockholm (SE)
(74) Representative: Kribber, Klaus-Dieter

(56) References cited:
- WO-A-01/08395
- US-A- 6 085 251
- US-B1- 6 226 680
- CUERVO F ET AL: "MEGACO PROTOCOL" IETF REQUEST FOR COMMENTS, XX, XX, 21 September 1999 (1999-09-21), pages 1-106, XP002206929
- MILLER G J ET AL: "Reliable end-to-end communication in the tactical ATM environment" MILITARY COMMUNICATIONS CONFERENCE, 1996. MILCOM '96, CONFERENCE PROCEEDINGS, IEEE MCLEAN, VA, USA 21-24 OCT. 1996, NEW YORK, NY, USA,IEEE, US, 21 October 1996 (1996-10-21), pages 144-150, XP010203970 ISBN: 0-7803-3682-8

## Description

The invention relates generally to the sending and receiving of messages between two entities of a telecommunications network, where the media connections of one of the entities are controlled by the other. The invention is in particular suitable for transporting Multimedia Gateway Control Protocol messages between a media gateway controller and a media gateway of a physically discomposed H.323 gateway.

### Background of the invention

For cost-efficiency reasons many telecommunications operators are increasingly deploying non-Synchronous Transfer Mode STM transport technologies, such as Asynchronous Transfer Mode ATM and Internet Protocol IP, inside their networks. Therefore, solutions are required to support existing services of today's public telecommunication networks over multiple-vendor non-STM infrastructures.

In current public telecommunication networks, the call control CC function and the bearer control BC function are tightly coupled in the same public network protocol, such as ISDN User Part ISUP. Inter alia for the purpose of providing a multiple-vendor suited non-STM telecommunications system infrastructure has a new network architecture been developed that allows for the splitting of the call control CC function and the bearer control BC function into separate entities utilizing separate protocols accordingly.

The split of call control CC and bearer control BC functions exposes a new interface between the CC function and BC function. A protocol is required to enable a coupling between the CC and BC functions when the telecommunications node is implemented in a separated environment. The common term of this protocol is 'Media Gateway Control Protocol', which is developed by the International Telecommunications Union - Telecommunications Sector ITU-T Study Group and by the Internet Engineering Task Force IETF Megaco working group. The protocol is named H.248. In context with H.248 is the network entity providing the call control CC function known as a Media Gateway Controller MGC, and the network entity providing the bearer control BC function is known as a Media Gateway MG.

The Media Gateway Controller MGC and the Media Gateway MG can be seen to operate in a "client-server" relationship. The MGC as a server controls a call logic for physical connections in the MG. The MG as a client administrates actual physical connections in response to commands from the MGC. Examples of information passed from the MGC to the MG in the Media Gateway Control Protocol are information for ordering a connection from one telephony circuit in the MG to another, i.e. when the MGC receives a request for a telephone call to be set up, information for ordering tones to be inserted in the MG's media stream, and information for ordering disconnection of circuits in the MG. Examples of information passed from the MG to the MGC in the Media Gateway Control Protocol are accounting information on call duration or statistical information on the current use of multimedia connections.

In a traditional telephony application, the amount of data passed between the Media Gateway Controller MGC and the Media Gateway MG is potentially very large. For example, in order to route a call to its correct destination, the MG requires knowledge of number analysis tables within the MGC - typically 5 to 10 Mbytes for local exchange functionality. A typical H.248 command which could carry this type of information from the MGC to the MG would be the MODIFY command, copying the number analysis from the MGC to the MG. Similarly, large amounts of information could also be passed in the other direction, from the MG to the MGC. One example of this would refer to the AUDIT command, where the MGC requests specific information from the MG, wherein the MG would return the AUDIT REPLY command. Similarly, the SERVICECHANGE command, whereby the MG informs its corresponding MGC of its capabilities, could carry large amounts of information, particularly at MG start-up.

To limit the amount of signaling between the MGC and the MG, commands can be grouped into Actions, one or more such Actions being able to be grouped together into a Transaction. However, independent of whether the information contained in Media Gateway Control Protocol messages is structured in Transactions, Actions or Commands, there is for H.248 messages an underlying transport mechanism, e.g. ATM, IP etc., that provides by means of a so-called maximum transmission unit MTU a length limit for information portions. Therefore, a segmentation/reassembly mechanism in the transport layer may be utilized to transport information exceeding the MTU. For example, in IP networks, a method of IP fragmentation is used which allows datagrams created as a single packet to be split into many smaller packets for transmission to and reassembly at a receiving host.

The exact value of the maximum transmission unit MTU for the underlying network depends on the type of network used. For example, the MTU for Ethernet Networks is 1500 bytes, whilst the MTU for an IEEE 802.4 Token Ring is 8166 bytes. All IP networks must support a minimum MTU of 576 bytes. However, the maximum theoretical MTU of an IP package, regardless of the underlying physical protocol, is still limited to 64 Kbytes despite the fragmentation mechanism. This is because, when a group of fragmented IP packages is reassembled at a receiving IP node, the length field in an IP packet is limited to 16 bits (2¹⁶ = 65.536 , i.e.64k).

This represents a problem for the H.248 protocol in cases where messages are composed of data larger than 64 Kbytes, such as the 5 to 10 Mbytes of B-number analysis data in a single transaction. In this example, regardless of the underlying physical network, the H.248 protocol cannot generate single messages of length greater than 64 Kbytes.

WO 01/08395 A1 discloses the transport of Vertical Control Protocol messages' between a media gateway controller and a media gateway. A protocol adaptation function layer is provided that segments and re-assembles Vertical Control Protocol messages into units of dedicated lengths. The segments are transported through a communication protocol stack including a layer conforming to a message transfer part protocol to the respective target entity.

### Summary of the invention

It is an object of the invention to provide an improved method and device for transporting Media Gateway Control Protocol messages between two entities of a telecommunications network without requiring a dedicated length limit of such messages.

This is solved by the teaching of the independent claims.

The invention refers to a method for transporting a media gateway control protocol message from a first entity to a second entity of a telecommunication network. The method comprises the steps of receiving from the second entity a first message segment transaction request including a message identifier, providing a media gateway control protocol message, segmenting the provided media gateway control protocol message into a first message segment and at least one further message segment, marking the first message segment as being segmented, including the message identifier in the marked first message segment, sending the marked first message segment including the message identifier to the second entity, receiving a further message segment transaction request, marking the further message segment as being segmented if the further message segment is not a final message segment, or marking the further message segment as being not segmented if the further message segment is the final message segment, including the message identifier in the marked further message segment, and sending the marked further message segment including the message identifier to the second entity.

The invention refers also to a method for transporting a media gateway control protocol message from a first entity to a second entity of a telecommunication network, comprising the steps of sending to the first entity a first message segment transaction request including a message identifier, receiving in response to the first message segment transaction request a first message segment marked as segmented and including the message identifier, sending in response to the received first message segment to the first entity a second message segment transaction request including the message identifier, receiving in response to the second message segment transaction request a second message segment including the message identifier, adding the received first message segment and the second message segment together, sending in response to the received second message segment to the first entity a further message segment transaction request including the message identifier, receiving in response to the further message segment transaction request a further message segment including the message identifier, and if the received further message segment is marked as not segmented, adding the received further message segment to the previously received message segments, and acting upon the contents of the reassembled message.

Preferred embodiments of the invention are described in the dependent claims.

Aspects of the invention refers to a method for transporting a media gateway control protocol message from a first entity, e.g. a media gateway controller, having a first protocol stack to a second entity, e.g. a media gateway, of a telecommunication network. A media gateway control protocol message is provided in said first entity. A portion of said media gateway control protocol message is selected, wherein a length of said portion does not exceed a dedicated length limit. In the next step, a network protocol message, which includes the selected portion, is created. Afterwards, the network protocol message is sent to a transport layer of the first protocol stack for transport of said network protocol message to said second entity.

Advantageously, the first entity is capable to handle media gateway protocol messages exceeding a dedicated length limit as required by the H.248 protocol. In an advantageous embodiment can the media gateway protocol message be concentrated to only relevant information by a corresponding selection. In other words, redundant information contained in the media gateway protocol message can be truncated.

The invention refers in a further aspect to a method for receiving a media gateway control protocol message at an entity of a telecommunication network, wherein said entity has a protocol stack. The method comprises the steps of receiving at least one network protocol message provided by a transport layer of the protocol stack of the entity; reassembling at a layer above the transport layer of the protocol stack said media gateway control protocol message from the received at least one network protocol message.

The invention refers in another aspect to a network entity, in particular a media gateway or a media gateway controller, adapted to perform the method according to any of the method claims.

In one embodiment is at least one further portion of the media gateway control protocol message selected, wherein a further length of said further portion does not exceed the dedicated length limit. At least one further network protocol message is created from the at least one further selected portion, and is sent to the transport layer of the first protocol stack for its transport to said second entity.

Advantageously, truncations of media gateway protocol messages are avoided in this way. Thus, transactions can be fully transmitted, even if their length exceeds a dedicated limit, e.g. 64 Kbytes. Therefore, the risk is eliminated that, e.g., single calls would fail due to missing information, or even more serious, the connection between the MGC and MG would fail since it would be regarded as being unreliable, hence all calls which require that connection would fail.

In a further embodiment is an identifier identifying the media gateway control protocol message included into any network protocol message that is created. This allows for an easy correlation of a plurality of network protocol messages to the one identified media gateway protocol message at the receiving entity.

In another embodiment is an indicator included into the network protocol message, if a further network protocol message will be sent. The indicator indicates this fact, i.e. that a further network protocol message will be sent. This allows for an easy reassembling of the network protocol message at the receiving side.

In a further embodiment is determined, whether an acknowledgement for a network protocol message previously sent is received. Any sending of a further network protocol message is performed only if the acknowledgement has been received. The use of acknowledgements increases the reliability in the operated telecommunication network.

In another embodiment comprises the re-assembling of the media gateway control protocol message an acknowledging of the receiving of the network protocol message.

### Brief description of the figures

The figures show:
- Fig. 1: a schematic representation of interfaces and functions of an H.323 gateway;
- Fig. 2: a schematic representation of one embodiment of a physical decomposition of a H.323 gateway into a media gateway controller and a media gateway;
- Fig. 3: a graphical representation of various parts of a Media Gateway Control Protocol message exchanged between a media gateway controller and a media gateway;
- Fig. 4: a schematic diagram of one embodiment of protocol stacks used by a physically decomposed H.323 gateway to transport Media Gateway Control Protocol messages between a media gateway controller and a media gateway;
- Fig. 5: a segmentation of a Media Gateway Control Protocol message into multiple Operation Request messages, and a transport of those Operation Request messages between a media gateway controller and a media gateway; and
- Fig. 6: a segmentation of a Media Gateway Control Protocol message into multiple Operation Accept messages, and a transport of those Operation Accept messages between a media gateway and a media gateway controller.

### Detailed description

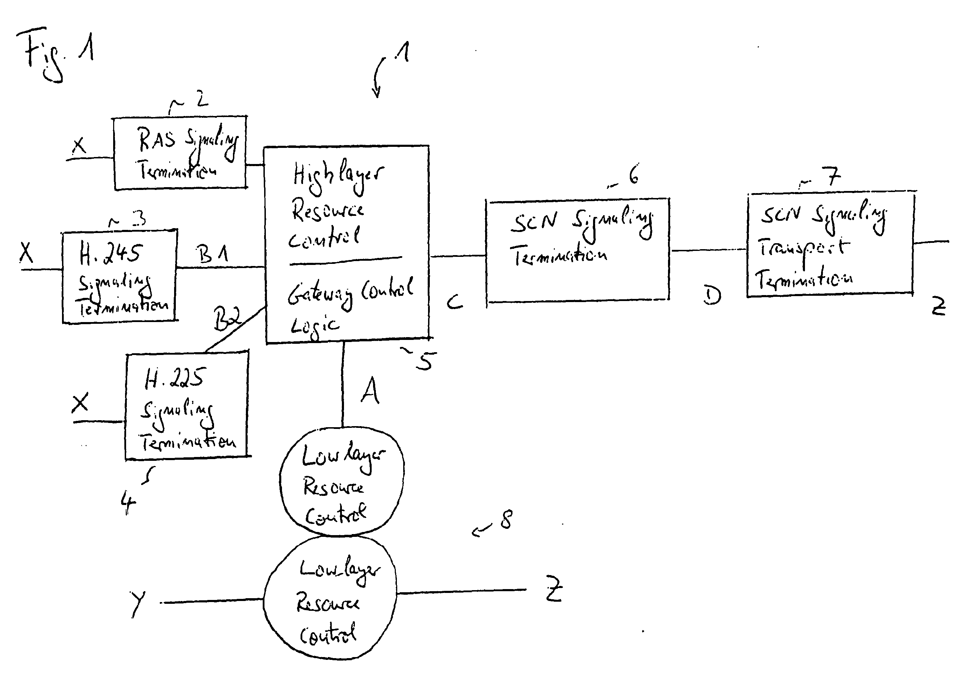

Referring to Fig. 1, there is shown generally a representation of a group of interfaces and functions of a multimedia gateway 1 operating in accordance with ITU-T Recommendation H.323. The multimedia gateway 1 is an endpoint on an H.323 multimedia network that provides for real-time, two-way communications between terminals on the packet-based H.323 network and other ITU-T terminals on a switched circuit communications network - such as ISDN or PSTN terminals - or to another H.323 gateway. Whilst the invention will be described in relation to multimedia gateways, it is to be understood that it is also applicable to terminals, gatekeepers, multipoint controllers, multipoint processors and other telecommunications nodes forming part of a multimedia network in which the media connections of one entity are controlled by another entity.

The multimedia gateway 1 includes signaling termination points 2, 3, 4 respectively acting to provide an interface between RAS signaling messages, H.245 signaling messages and H.225 signaling messages in a H.323 network and a gateway control logic unit 5. A further signaling termination point 6 acts to provide an interface between Facility Associated Signaling SCN messages and the gateway control unit 5. A SCN signaling transport termination point 7 provides an interface between a SCN network and the signaling termination point 6.

The control functions of the gateway 1 are split between high layer resource control functions in the gateway control logic unit 5 and lower layer resource control functions provided by a gateway device 8. The H.323 interface between the packet-based user data in the H.323 network and the user data in the SCN network is provided by the gateway device 8.

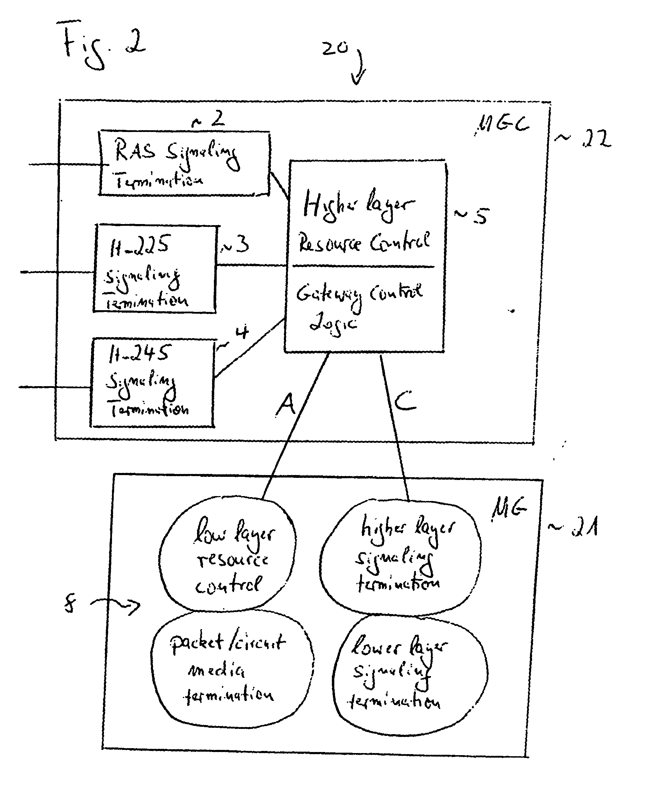

The functionality of the media gateway 1 can be physically decomposed into a media gateway controller and a media gateway. Figure 2 shows one example of such a physical decomposed multimedia gateway 20. In this example, the Facility Associated Signaling SCN services provided by the termination points 6 and 7 are isolated - together with gateway device functions 8 - in a media gateway 21, whilst the H.323 signaling is retained in a media gateway controller 22.

It will be appreciated that many other possible gateway decompositions may be conceived by a skilled person in the telecommunications field. In general, the media gateway 21 acts to convert media provided in one type of network to the format required in another type of network. The media gateway controller 22 controls those parts of the call state that pertain to connection control for media channels in the media gateway 21.

It can be seen from Figure 2 that the physically decomposed multimedia gateway 20 exposes a device control interface A between the gateway control logic unit 5 and the gateway device functions 8, as well as an SGN signaling interface C between the gateway control logic unit 5 and the SGN termination functions 6 and 7. Messages are therefore required to be exchanged on the A and G interfaces between the media gateway controller 21 and the media gateway 22 over an external telecommunications link. In this example, the H. 248 or Media Gateway Control Protocol defines a general framework for exchanging such messages between entities of a physically decomposed multimedia gateway over the A interface.

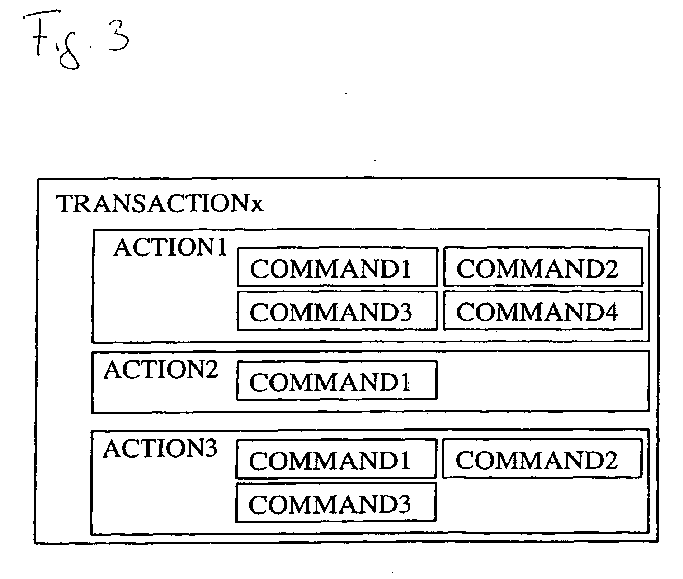

Figure 3 provides a graphical representation of the relationships between Transactions, Actions, and Commands in a Media Gateway Control Protocol message. In accordance with the Media Gateway Control Protocol, commands from the media gateway controller 22 to the media gateway 21 are preferably grouped into Transactions, each of which consists of one or more Actions. An Action consists of a series of Commands that are limited to operating within a single Context. A Context represents a collection of Terminations (entities that source and/or sink media streams) involved in a single call or conference. Transactions are presented to the media gateway 21 as Transaction Request messages. Corresponding responses, in the form of a Transaction Accept message or a Transaction Reject message, are returned to the media gateway controller 22.

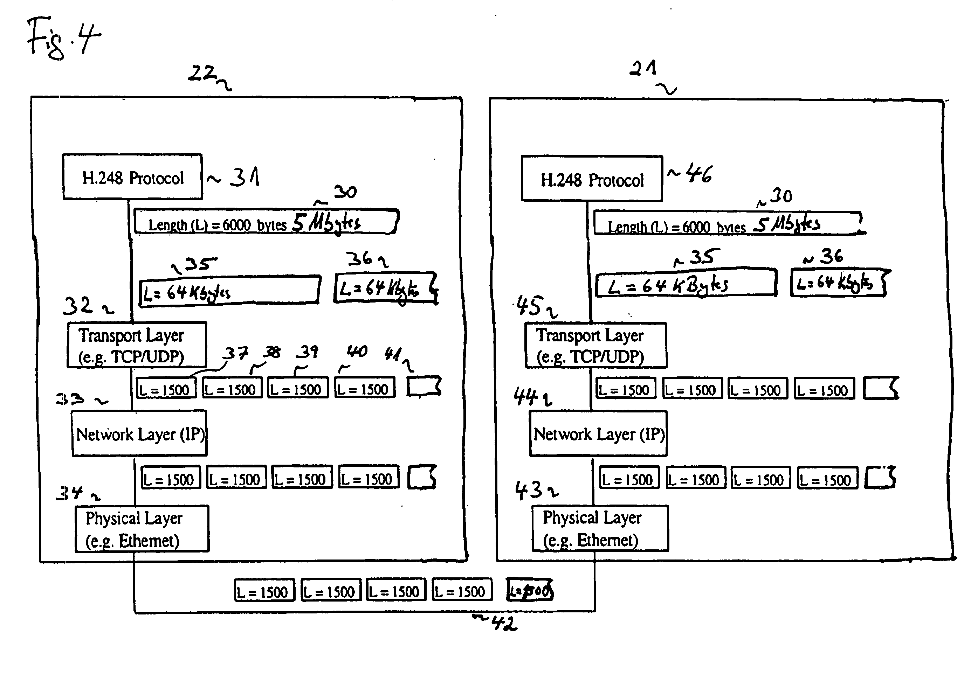

As can be seen in Figure 4, a Media Gateway Control Protocol message 30 is created in an H.248 protocol layer 31, and is then transported between the media gateway controller 22 and the media gateway 21 through a communication protocol stack including a transport layer 32, a network layer 33 and a physical layer 34. In the exemplary application, the telecommunications network 30 interconnecting the media gateway controller 22 and the media gateway 21 is an Ethernet network, the transport layer 32, network layer 33 and physical layer 34 respectively operating in accordance with the Transmission Control Protocol / User Datagram Protocol TCP/UDP, the Internet Protocol IP and the Ethernet.

The transport layer 32 includes a segmentation and reassembly mechanism to fragment information from H.248 protocol layer 31 into IP packets able to be transported by the Ethernet network. Each of these IP packets is limited, in this example, to maximum size of 1, 500 bytes. The IP packets include a 16-bit length field, in which is stored the length of the original information from the H.248 protocol layer 31 prior to fragmentation, to enable reconstruction of that original information up to a maximum transmission unit MTU of 64 Kbytes.

The Media Gateway Control Protocol message 30 may consist of one or more commands, which are grouped as explained with respect to Fig. 3, sent by the Media Gateway Controller 22 to control the operation of the Media Gateway 21. For example, a typical H.248 command which could carry such control information from the Media Gateway Controller MGC to the Media Gateway MG would be the MODIFY command, copying the number analysis from the MGC to the MG.

In order to become successfully transported to the Media Gateway 21, the Media Gateway Control Protocol message 30 is adapted to a dedicated MTU that is defined preferably in context with the Media Gateway Control protocol, e.g. to a length no greater than an MTU of 64 Kbytes of an IP Network. As shown in Fig. 4, therefore a separate mechanism of segmentation / reassembly is carried out for messages which exceed the 64 Kbytes MTU. In particular, a segmentation function is invoked prior to the Media Gateway Control Protocol message 30 being passed to the transport layer 32 in the transmitting entity, i.e. in the Media Gateway Controller 22.

The segmentation mechanism results in a creation of a series of message segments 35, 36, etc., each of which having a length not greater than 64 Kbytes. Each of these message segments 35, 36, etc. is then segmented by the transport layer 32 into IP packets 37, 38, 39, 40, 41, etc. of 1,500 bytes for transport by the network layer 33 and physical layer 34 over a physical link 42 to the Media Gateway 21. The received IP packets are then passed by a corresponding physical layer 43 and network layer 44 to a transport layer 45 for reassembly into the original message segments 35, 36, etc.

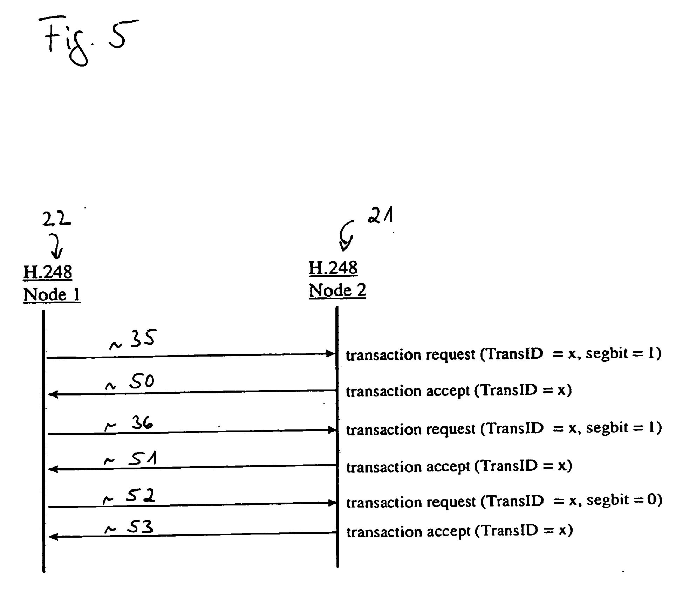

One embodiment of the invention refers to acknowledgements of the segments. In order to ensure reliability of transmission, the message segments 35, 36, etc. are sent to the Media Gateway 21 by a system of multiple message segments transaction request / accept messages. As seen in Figure 5, the receipt of each message segment 35, 36 etc. by the Media Gateway 21 results in the creation and sending of a corresponding acknowledgement message 50, 51 etc. to the Media Gateway Controller 22. In this example, the sending of each message segment from the Media Gateway Controller 22 to the Media Gateway 21 depends upon receipt at the Media Gateway Controller 22 of an acknowledgement message sent in response to a preceding message segment being successfully received by the Media Gateway 21.

Preferably only when all message segments are received, and corresponding acknowledgement messages are sent, is the Media Gateway Controller Protocol message 30 reconstituted by the H.248 protocol layer 46 of the Media Gateway 21.

Preferably, each message segment corresponding to a single Media Gateway Control Protocol message includes a same message identifier to enable the Media Gateway to recognize that message in its appropriate context. The message identifier may include a Transaction ID identifying a Transaction included in or constituting the Media Gateway Control Protocol message. Moreover, a segmentation identifier may be included in the message segment to signal to the Media Gateway that received message segments form part of a larger Media Gateway Control protocol message.

In the example of Fig. 5, the Media Gateway Control Protocol message 30 is several times the size of the MTU of 64 Kbytes. Accordingly, the Media Gateway Controller 22 acts to segment the message 30 to message segments 35, 36, etc. The first message segment 35 is marked as being segmented (segbit=1), a message identifier is included (TranslD = x) and then sent to the Media Gateway 21 as a message segment transaction request.

The Media Gateway 21 then responds by sending a corresponding message segment transaction acceptance 50. This will trigger the Media Gateway Controller 22 to send the next message segment 36, again marking the information as being segmented (segbit=1) and including a message identifier (TranslD = x). The Media Gateway 21 will then add the two received message segments 35 and 36 together and respond with another message segment transaction acceptance 51. This process continues until the final message segment 52 is sent, this time with the segmentation marking not being set (segbit = 0). The Media Gateway 21 will add the final message segment to the previously received message segments and respond with a message segment transaction acceptance 53. Preferably, only at this point will the transport of the Media Gateway Control Protocol message 30 be considered successful, and the Media Gateway 21 and/or the Media Gateway Controller 22 then act upon the contents of that message.

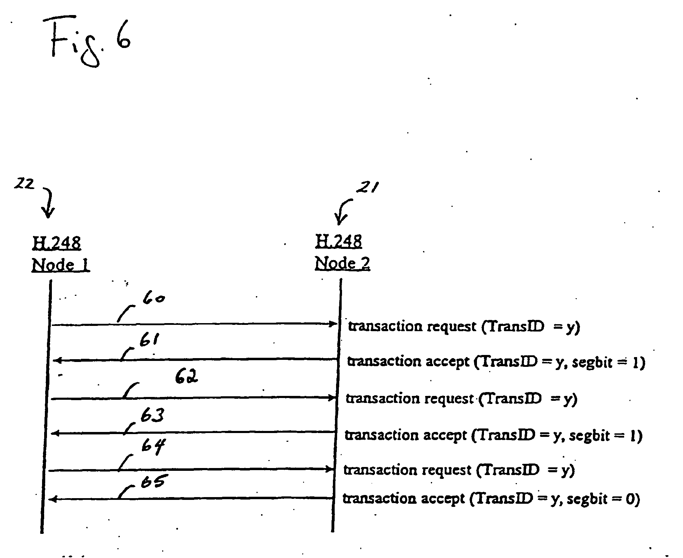

Alternatively, Media Gateway Control Protocol messages such as the "Audit Reply" command are sent from the media gateway 21 to the media gateway controller 22. Such commands can have a length exceeding 64 Kbytes. As seen in Figure 6, a first message segment transaction request 60 including a message identifier (TranslD = y) is sent from the Media Gateway Controller 22 to the Media Gateway 21. Upon receipt, the Media Gateway 21 acts to segment the requested Media Gateway Controller Protocol message into message segments 61, 63 and 65. The first message segment 61 is then marked as being segmented (segbit=1); a message identifier is included (TranslD = y) and then sent to the Media Gateway Controller 22 as a message segment transaction acceptance. The Media Gateway Controller 22 then responds by sending a corresponding message segment transaction request 62. This will trigger the Media Gateway 21 to send the next message segment 63, again marking the information as being segmented (segbit=1) and including a message identifier (TranslD = y). The Media Gateway Controller 22 will then add the two received message segments 61 and 63 together and respond with a further message segment transaction request 64. The final message segment acceptance is then sent, this time with the segmentation marking not being set (segbit=0). The Media Gateway Controller 22 will add the final message segment to the previously received message segments and then act upon the contents of the reassembled message.

Those skilled in the art will appreciate that there may be many variations, modification and/or additions to the configuration described herein which are within the scope of the present invention. In particular, whilst the present invention has been described in relation to use in a physically decomposed media gateway, it may also be used by other entities in a telecommunications network.

## Claims

1. A method for transporting a media gateway control protocol message from a first entity (21) to a second entity (22) of a telecommunication network, wherein the first entity (21) is a media gateway and wherein the second entity (22) is a media gateway controller, the method comprising the steps of:
- receiving from the second entity a first message segment transaction request including a message identifier (60),
- providing a media gateway control protocol message,
- segmenting the provided media gateway control protocol message into a first message segment and at least one further message segment,
- marking the first message segment as being segmented,
- including the message identifier in the marked first message segment,
- sending the marked first message segment including the message identifier to the second entity (61),
- receiving a further message segment transaction request (62, 64),
- marking the further message segment as being segmented if the further message .. segment is not a final message segment, or marking the further message segment as being not segmented if the further message segment is the final message segment,
- including the message identifier in the marked further message segment,
- sending the marked further message segment including the message identifier to the second entity (63, 65).

2. Method according to claim 1, wherein the steps of sending (61, 63, 65) message segments comprise respectively
- creating a network protocol message including the marked message segment including the message identifier,
- sending the network protocol message to a transport layer of a protocol stack of the first entity for a transport to the second entity.

3. Method according to claim 1 or 2, wherein the media gateway control protocol message, which is transported, is an audit reply command.

4. Method according to claim 1, 2 or 3, comprising the step of truncating redundant information contained in the media gateway control protocol message.

5. A method for transporting a media gateway control protocol message from a first entity (21) to a second entity (22) of a telecommunication network, wherein the first entity (21) is a media gateway and wherein the second entity (22) is a media gateway controller, the method comprising the steps of:
- sending to the first entity (21) a first message segment transaction request including a message identifier (60).
- receiving in response to the first message segment transaction request a first message segment marked as segmented and including the message identifier (61),
- sending in response to the received first message segment to the first entity (21) a second message segment transaction request including the message identifier (62),
- receiving in response to the second message segment transaction request a second message segment including the message identifier (63),
- adding the received first message segment and the second message segment together.
- if the received further message segment is marked as not segmented,
then
-- adding the received further message segment to the previously received message segments, and
-- acting upon the contents of the reassembled message,
else
-- sending in response to the received second message segment to the first entity (21) a further message segment transaction request including the message identifier (64),
-- receiving in response to the further message segment transaction request a further message segment including the message identifier (65), and
-- adding the received further message segment to the previously received message segments.

6. Method according to claim 5, wherein the media gateway control protocol message, which is transported, is an audit reply command.

7. Media gateway adapted to perform the method according to any one of the 1 to 4.

8. Media gateway controller adapted to perform the method according to claim 5 or 6.

## Patentansprüche

1. Verfahren zum Transportieren einer Media Gateway-Steuerungsprotokollnachricht von einer ersten Instanz (21) zu einer zweiten Instanz (22) eines Telekommunikationsnetzes, wobei es sich bei der ersten Instanz (21) um ein Media Gateway handelt und wobei es sich bei der zweiten Instanz (22) um einen Media Gateway Controller handelt, und das Verfahren die folgenden Schritte umfasst:
- Empfangen von der ersten Instanz einer ersten Nachrichtensegment-Transaktionsanforderung, die eine Nachrichtenkennung umfasst (60),
- Bereitstellen einer Media Gateway-Steuerungsprotokollnachricht,
- Segmentieren der bereitgestellten Media Gateway-Steuerungsprotokollnachricht in ein erstes Nachrichtensegment und wenigstens ein weiteres Nachrichtensegment,
- Kennzeichnen des ersten Nachrichtensegments als segmentiert,
- Aufnehmen der Nachrichtenkennung in das **gekennzeichnet**e erste Nachrichtensegment,
- Senden des **gekennzeichneten** ersten Nachrichtensegments, das die Nachrichtenkennung umfasst, an die zweite Instanz (61),
- Empfangen einer weiteren Nachrichtensegment-Transaktionsanforderung (62, 64),
- Kennzeichnen des weiteren Nachrichtensegments als segmentiert, wenn es sich bei dem weiteren Nachrichtensegment nicht um ein letztes Nachrichtensegment handelt, oder Kennzeichnen des weiteren Nachrichtensegments als nicht segmentiert, wenn es sich bei dem weiteren Nachrichtensegment um das letzte Nachrichtensegment handelt,
- Aufnehmen der Nachrichtenkennung in das **gekennzeichnete** weitere Nachrichtensegment,
- Senden des **gekennzeichneten** weiteren Nachrichtensegments, das die Nachrichtenkennung umfasst, an die zweite Instanz (63, 65).

2. Verfahren nach Anspruch 1, wobei die Schritte des Sendens (61, 63, 65) von Nachrichtensegmenten jeweils umfassen:
- Erstellen einer Netzprotokollnachricht, die das **gekennzeichnete** Nachrichtensegment umfasst, das die Nachrichtenkennung umfasst,
- Senden der Netzprotokollnachricht an eine Transportschicht eines Protokollstapels der ersten Instanz für einen Transport zur zweiten Instanz.

3. Verfahren nach Anspruch 1 oder 2, wobei es sich bei der Media Gateway-Steuerungsprotokollnachricht, die transportiert wird, um einen Auditantwortbefehl handelt.

4. Verfahren nach Anspruch 1, 2 oder 3, umfassend den Schritt des Abschneidens von redundanten Informationen, die in der Media Gateway-Steuerungsprotokollnachricht enthalten sind.

5. Verfahren zum Transportieren einer Media Gateway-Steuerungsprotokollnachricht von einer ersten Instanz (21) zu einer zweiten Instanz (22) eines Telekommunikationsnetzes, wobei es sich bei der ersten Instanz (21) um ein Media Gateway handelt und wobei es sich bei der zweiten Instanz (22) um einen Media Gateway Controller handelt, und das Verfahren die folgenden Schritte umfasst:
- Senden an die erste Instanz (21) einer ersten Nachrichtensegment-Transaktionsanforderung, die eine Nachrichtenkennung umfasst (60),
- Empfangen als Reaktion auf die erste Nachrichtensegment-Transaktionsanforderung eines ersten Nachrichtensegments, das als segmentiert **gekennzeichnet** ist und die Nachrichtenkennung umfasst (61),
- Senden als Reaktion auf das empfangene erste Nachrichtensegment an die erste Instanz (21) einer zweiten Nachrichtensegment-Transaktionsanforderung, welche die Nachrichtenkennung umfasst (62),
- Empfangen als Reaktion auf die zweite Nachrichtensegment-Transaktionsanforderung eines zweiten Nachrichtensegments, das die Nachrichtenkennung umfasst (63),
- Zusammenfügen des empfangenen ersten Nachrichtensegments und des zweiten Nachrichtensegments,
- wenn das empfangene weitere Nachrichtensegment nicht als segmentiert **gekennzeichnet** ist,
dann
- Hinzufügen des empfangenen weiteren Nachrichtensegments zu den vorher empfangenen Nachrichtensegmenten, und
- Handeln nach den Inhalten der wieder zusammengesetzten Nachricht,
andernfalls
- Senden als Reaktion auf das empfangene zweite Nachrichtensegment an die erste Instanz (21) einer weiteren Nachrichtensegment-Transaktionsanforderung, welche die Nachrichtenkennung umfasst (64),
- Empfangen als Reaktion auf die weitere Nachrichtensegment-Transaktionsanforderung eines weiteren Nachrichtensegments, das die Nachrichtenkennung umfasst (65), und
- Hinzufügen des empfangenen weiteren Nachrichtensegments zu den vorher empfangenen Nachrichtensegmenten.

6. Verfahren nach Anspruch 5, wobei es sich bei der Media Gateway-Steuerungsprotokollnachricht, die transportiert wird, um einen Auditantwortbefehl handelt.

7. Media Gateway, das so ausgelegt ist, dass es das Verfahren nach einem der Ansprüche 1 bis 4 durchführt.

8. Media Gateway Controller, der so ausgelegt ist, dass er das Verfahren nach Anspruch 5 oder 6 durchführt.

## Revendications

1. Procédé de transport d'un message de protocole de commande de passerelle média d'une première entité (21) vers une seconde entité (22) d'un réseau de télécommunication, dans lequel la première entité (21) est une passerelle média et dans lequel la seconde entité (22) est un contrôleur de passerelle média, le procédé comprenant les étapes consistant à :
- recevoir depuis la seconde entité une première demande de transaction de segment de message incluant un identifiant de message (60),
- fournir un message de protocole de commande de passerelle média,
- segmenter le message de protocole de commande de passerelle média fourni en un premier segment de message et au moins un autre segment de message,
- marquer le segment de premier message comme étant segmenté,
- inclure l'identifiant de message dans le segment de premier message marqué,
- envoyer le segment de premier message marqué incluant l'identifiant de message à la seconde entité (61),
- recevoir une demande de transaction d'autre segment de message (62,64),
- marquer l'autre segment de message comme étant segmenté si l'autre segment de message n'est pas un segment de message final, ou marquer l'autre segment de message comme n'étant pas segmenté si l'autre segment de message, est le segment de message final,
- inclure l'identifiant de message dans l'autre segment de message marqué,
- envoyer l'autre segment de message marqué incluant l'identifiant de message à la seconde entité (63,65).

2. Procédé selon la revendication 1, dans lequel les étapes d'envoi (61, 63, 65) de segments de message comprennent respectivement de
- créer un message de protocole de réseau incluant le segment de message marqué incluant l'identifiant de message,
- envoyer le message de protocole de réseau à une couche de transport d'une pile de protocole de la première entité en vue d'un transport vers la seconde entité.

3. Procédé selon la revendication 1 ou 2, dans lequel le message de protocole de commande de passerelle média, qui est transporté, est une commande de réponse à un audit.

4. Procédé selon la revendication 1,2 ou 3, comprenant l'étape de troncature de l'information redondante contenue dans le message de protocole de commande de passerelle média.

5. Procédé de transport d'un message de protocole de commande de passerelle média d'une première entité (21) vers une seconde entité (22) d'un réseau de télécommunication, dans lequel la première entité (21) est une passerelle média et dans lequel la seconde entité (22) est un contrôleur de passerelle média, le procédé comprenant les étapes consistant à :
- envoyer à la première entité (21) une première demande de transaction de segment de message incluant un identifiant de message (60),
- recevoir en réponse à la première demande de transaction de segment de message un premier segment de message marqué comme segmenté et incluant l'identifiant de message (61),
- envoyer en réponse au premier segment de message reçu à la première entité (21) une seconde demande de transaction de segment de message incluant l'identifiant de message (62),
- recevoir en réponse à la seconde demande de transaction de segment de message un second segment de message incluant l'identifiant de message (63),
- ajouter l'un à l'autre le premier segment de message reçu et le second segment de message,
- si l'autre segment de message reçu est marqué comme non segmenté, alors
-- ajouter l'autre segment de message reçu aux segments de message précédemment reçus, et
-- agir sur les contenus du message réassemblé, sinon
-- envoyer en réponse au second segment de message reçu vers la première entité (21) une demande de transaction d'autre segment de message incluant l'identifiant de message (64),
-- recevoir en réponse à la demande de transaction d'autre segment de message un autre segment de message incluant l'identifiant de message (65), et
-- ajouter l'autre segment de message reçu aux segments de message précédemment reçus.

6. Procédé selon la revendication 5, dans lequel le message de protocole de commande de passerelle média, qui est transporté, est une commande de réponse à l'audit.

7. Passerelle média, adaptée afin de mettre en oeuvre le procédé selon une quelconque des revendications 1 à 4.

8. Contrôleur de passerelle média adapté afin de mettre en oeuvre le procédé selon la revendication 5 ou 6.
